(19) Europäisches Patentamt
European Patent Office
Office européen des brevets

(11) **EP 4 017 080 A1**

(12) **EUROPEAN PATENT APPLICATION**
published in accordance with Art. 153(4) EPC

(43) Date of publication:
**22.06.2022 Bulletin 2022/25**

(21) Application number: **19941266.9**

(22) Date of filing: **15.08.2019**

(51) International Patent Classification (IPC):
**H04W 24/10** (2009.01)   **H04W 16/28** (2009.01)
**H04W 28/06** (2009.01)

(52) Cooperative Patent Classification (CPC):
**H04W 16/28; H04W 24/10; H04W 28/06**

(86) International application number:
**PCT/JP2019/032062**

(87) International publication number:
**WO 2021/029066 (18.02.2021 Gazette 2021/07)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **NTT DOCOMO, INC.**
**Chiyoda-Ku**
**Tokyo 100-6150 (JP)**

(72) Inventors:
• **MATSUMURA, Yuki**
 **Tokyo 100-6150 (JP)**
• **NAGATA, Satoshi**
 **Tokyo 100-6150 (JP)**
• **WANG, Jing**
 **Beijing 100190 (CN)**
• **HOU, Xiaolin**
 **Beijing 100190 (CN)**

(74) Representative: **Hoffmann Eitle**
**Patent- und Rechtsanwälte PartmbB**
**Arabellastraße 30**
**81925 München (DE)**

(54) **TERMINAL AND WIRELESS COMMUNICATION METHOD**

(57)  An aspect of a terminal of the present disclosure includes: a control section that controls detection of a beam failure; and a transmitting section that transmits information related to a cell in which the beam failure is detected and a new candidate beam, by using a MAC control element. A format of the MAC control element includes at least a first field indicating presence or absence of detection of the beam failure for each cell and a second field indicating information related to a new candidate beam for a cell in which the beam failure is detected.

| $C_7$ | $C_6$ | $C_5$ | $C_4$ | $C_3$ | $C_2$ | $C_1$ | R OR $C_0$ | Oct 1 |
|---|---|---|---|---|---|---|---|---|
| ... | ... | ... | ... | ... | ... | ... | ... | ⋮ |
| $C_N$ | $C_{N-1}$ | $C_{N-2}$ | $C_{N-3}$ | $C_{N-4}$ | $C_{N-5}$ | $C_{N-6}$ | $C_{N-7}$ | |
| R | NBI | RS OR RESOURCE $ID_0$ | | | | | | |
| ... | ... | ... | | | | | | |
| R | NBI | RS OR RESOURCE $ID_M$ | | | | | | |

FIG. 4

EP 4 017 080 A1

# Description

## Technical Field

The present disclosure relates to a terminal and a radio communication method in next-generation mobile communication systems.

## Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP) Release (Rel.) 8 and Rel. 9), the specifications of LTE-Advanced (3GPP Rel. 10 to Rel. 14) have been drafted.

Successor systems of LTE (e.g., referred to as "5th generation mobile communication system (5G)," "5G+ (plus)," "New Radio (NR)," "3GPP Rel. 15 (or later versions)," and so on) are also under study.

In existing LTE systems (LTE Rel. 8 to Rel. 14), monitoring of radio link quality (radio link monitoring (RLM)) is performed. When a radio link failure (RLF) is detected through RLM, a user terminal (User Equipment (UE)) is requested to perform reestablishment of an RRC (Radio Resource Control) connection.

## Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

## Summary of Invention

## Technical Problem

For future radio communication systems (e.g., NR), a study is underway to perform a procedure for detecting a beam failure (BF) and switching to another beam (which may be referred to as a beam failure recovery (BFR) procedure, BFR, and the like). In the BFR procedure, when a beam failure has occurred, a UE reports a beam failure recovery request (BFRQ) for requesting recovery of the beam failure.

It is also understudy to report information related to a cell in which a beam failure is detected and a beam candidate that is new (also referred to as a new candidate beam), by using a MAC control element (e.g., a MAC CE) in the BFR procedure.

However, no sufficient study has been made about, in a case where information related to a cell in which a beam failure is detected and a new candidate beam is reported by using a MAC control element, how to transmit the MAC control element. If the MAC control element is not transmitted appropriately, the BFR procedure is not performed appropriately, and this may cause reduction in system performance.

Thus, an object of the present disclosure is to provide a terminal and a radio communication method that can appropriately perform a BFR procedure.

## Solution to Problem

A terminal according to an aspect of the present disclosure includes: a control section that controls detection of a beam failure; and a transmitting section that transmits information related to a cell in which the beam failure is detected and a new candidate beam, by using a MAC control element, wherein a format of the MAC control element includes at least a first field indicating presence or absence of detection of the beam failure for each cell and a second field indicating information related to a new candidate beam for a cell in which the beam failure is detected.

## Advantageous Effects of Invention

According to an aspect of the present disclosure, it is possible to appropriately perform a BFR procedure.

## Brief Description of Drawings

FIG. 1 is a diagram to show an example of a BFR procedure in Rel. 15 NR;
FIG. 2 is a diagram to show an example of a new BFR procedure;
FIG. 3 is a diagram to show examples of an LCID for which a BFR MAC CE is configured;
FIG. 4 is a diagram to show an example of a MAC CE format according to a second aspect;
FIGS. 5A and 5B are diagrams to show other examples of the MAC CE format according to the second aspect;
FIG. 6 is a diagram to show another example of the MAC CE format according to the second aspect;
FIG. 7 is a diagram to show another example of the MAC CE format according to the second aspect;
FIG. 8 is a diagram to show an example of a MAC CE format according to a third aspect;
FIG. 9 is a diagram to show another example of the MAC CE format according to the third aspect;
FIG. 10 is a diagram to show another example of the MAC CE format according to the third aspect;
FIG. 11 is a diagram to show an example of a schematic structure of a radio communication system according to one embodiment;

FIG. 12 is a diagram to show an example of a structure of a base station according to one embodiment;

FIG. 13 is a diagram to show an example of a structure of a user terminal according to one embodiment; and

FIG. 14 is a diagram to show an example of a hardware structure of the base station and the user terminal according to one embodiment.

Description of Embodiments

<Beam Failure Recovery>

For NR, a study is underway to perform communication by using beam forming. For example, a UE and a base station (e.g., a gNodeB (gNB)) may use a beam to be used for transmission of a signal (also referred to as a transmit beam, a Tx beam, and the like) and a beam to be used for reception of a signal (also referred to as a receive beam, a Rx beam, and the like).

In a case of using beam forming, influence of obstruction due to obstacles likely increases, which is assumed to deteriorate the radio link quality. Such deterioration in radio link quality may frequently cause a radio link failure (RLF). Occurrence of an RLF requires cell reconnection. Hence, frequent occurrence of an RLF leads to degradation in system throughput.

For NR, to suppress occurrence of an RLF, a study is underway to perform, in a case where the quality of a specific beam deteriorates, a procedure of switching to another beam (which may also be referred to as beam recovery (BR), beam failure recovery (BFR), L1/L2 (Layer 1/Layer 2) beam recovery, and the like). Note that the BFR procedure may also be referred to simply as BFR.

Note that a beam failure (BF) in the present disclosure may also be referred to as a link failure and a radio link failure (RLF) .

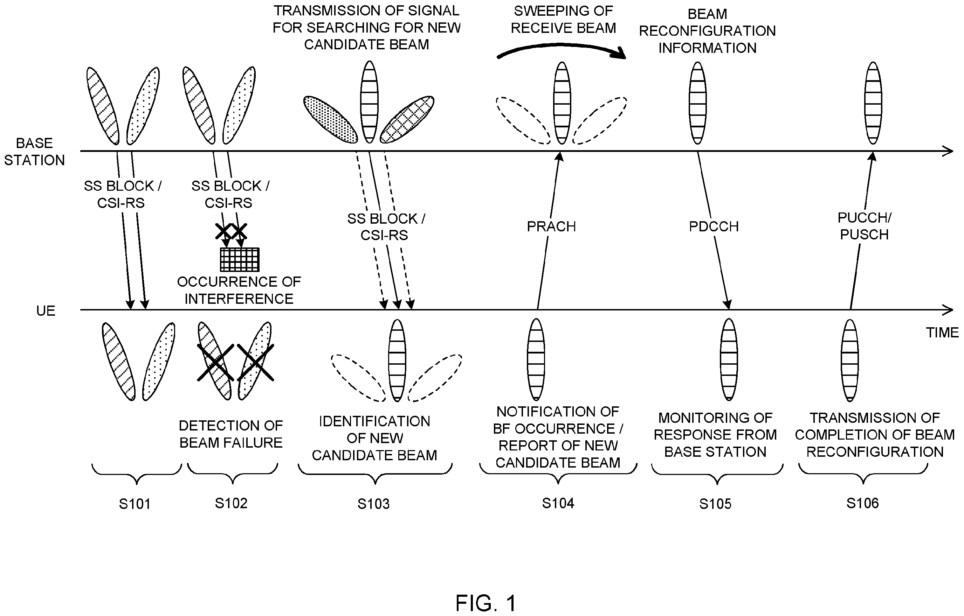

FIG. 1 is a diagram to show an example of a beam recovery procedure in Rel. 15 NR. The number of beams is an example and is not limited to this. In an initial state (step S101) in FIG. 1, a UE performs measurement based on the resources of a reference signal (RS) transmitted by using two beams.

The RS may be at least one of a synchronization signal block (SSB) and an RS for channel state measurement (Channel State Information RS (CSI-RS)). Note that the SSB may be referred to as an SS/PBCH (Physical Broadcast Channel) block and the like.

The RS may be at least one of a primary synchronization signal (Primary SS (PSS)), a secondary synchronization signal (Secondary SS (SSS)), a mobility reference signal (Mobility RS (MRS)), a signal included in an SSB, an SSB, a CSI-RS, a demodulation reference signal (DMRS), a beam-specific signal, and the like, or a signal configured by, for example, enhancing or modifying these signals. The RS measured in step S101 may be referred to as an RS for beam failure detection (Beam Failure Detection RS (BFD-RS)) and the like.

In step S102, due to radio waves from a base station being obstructed, the UE fails to detect the BFD-RS (or the reception quality of the RS deteriorates). Such obstruction may be caused by influence of an obstacle, fading, interference, and the like between the UE and the base station, for example.

When a given condition is satisfied, the UE detects a beam failure. For example, in a case where a block error rate (BLER) is smaller than a threshold for each of all configured BFD-RSs (BFD-RS resource configurations), the UE may detect an occurrence of a beam failure. When detecting an occurrence of a beam failure, a lower layer (physical (PHY) layer) of the UE may notify (indicate) a higher layer (MAC layer) of a beam failure instance.

Note that a criterion (criteria) for determination is not limited to BLER and may be a reference signal received power (Layer 1 Reference Signal Received Power (LI-RSRP)) in the physical layer. Instead of RS measurement or in addition to RS measurement, beam failure detection may be performed based on a downlink control channel (Physical Downlink Control Channel (PDCCH)) and the like. The BFD-RS may be expected to be in a relationship of quasi-co-location (QCL) with a DMRS on the PDCCH monitored by the UE.

Here, QCL is an indicator indicating statistical properties of the channel. For example, when a given signal/channel and another signal/channel are in a relationship of QCL, this may indicate that it is assumable that at least one of a Doppler shift, a Doppler spread, an average delay, a delay spread, and a spatial parameter (for example, a spatial reception filter/parameter (spatial Rx Filter/Parameter) and a spatial transmission filter/parameter (Spatial Tx Filter/Parameter)) is the same (the relationship of QCL is satisfied in at least one of these) between such a plurality of different signals/channels.

Note that the spatial reception parameter may correspond to a receive beam of the UE (for example, a receive analog beam), and the beam may be identified based on spatial QCL. The QCL (or at least one element in the QCL) in the present disclosure may be interpreted as spatial QCL (sQCL).

Information related to the BFD-RS (for example, an RS index, a resource, the number, the number of ports, precoding, and the like), information related to a beam failure detection (BFD) (for example, the above-described threshold), and the like may be configured (notified) for the UE by using higher layer signaling or the like. The information related to the BFR-RS may be referred to as information related to a BFR resource.

In the present disclosure, for example, the higher layer signaling may be any one or combination of Radio Resource Control (RRC) signaling, Medium Access Control (MAC) signaling, broadcast information, and the like.

The MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

When the MAC layer of the UE receives beam failure instance notification from the PHY layer of the UE, the MAC layer may start a given timer (which may be referred to as a beam failure detection timer). When the beam failure instance notification is received a given number of times (for example, beamFailureInstanceMax-Count configured in RRC) or more before the timer expires, the MAC layer of the UE may trigger BFR (for example, initiate any one of random access procedures to be described later).

When the base station receives no notification from the UE (for example, a time period in which no notification is received exceeds a given time period), or when the base station receives a given signal (a beam recovery request in step S104) from the UE, the base station may determine that the UE has detected a beam failure.

In step S103, the UE initiates, for beam recovery, searching of a new candidate beam to be used for new communication. The UE may select, by measuring a given RS, a new candidate beam corresponding to the RS. The RS measured in step S103 may be referred to as an RS for identification of a new candidate beam (New Candidate Beam Identification RS (NCBI-RS)), CBI-RS, a Candidate Beam RS (CB-RS), and the like. The NCBI-RS may be the same as or different from the BFD-RS. Note that the new candidate beam may be referred to as a novel candidate beam, a candidate beam, or a new beam.

The UE may determine a beam corresponding to an RS satisfying a given condition, as the new candidate beam. For example, the UE may determine the new candidate beam from among configured NCBI-RSs, based on an RS(s) having an LI-RSRP exceeding a threshold. Note that the criterion (criteria) for determination is not limited to L1-RSRP. The determination may be made by using at least one of L1-RSRP, L1-RSRQ, and L1-SINR (signal-to-noise interference power ratio). The LI-RSRP related to the SSB may be referred to as an SS-RSRP. The L1-RSRP related to the CSI-RS may be referred to as a CSI-RSRP. Similarly, the L1-RSRQ related to the SSB may be referred to as an SS-RSRQ. The L1-RSRQ related to the CSI-RS may be referred to as a CSI-RSRQ. Similarly, the L1-SINR related to the SSB may be referred to as an SS-SINR. The L1-SINR related to the CSI-RS may be referred to as a CSI-SINR.

Information related to the NCBI-RS (for example, an RS resource, the number, the number of ports, precoding, and the like), information related to a new candidate beam identification (NCBI) (for example, the above-described threshold), and the like may be configured (notified) for the UE by using higher layer signaling or the like. The information related to the NCBI-RS may be acquired based on the information related to the BFD-RS. The information related to the NCBI-RS may be referred to as information related to an NCBI resource.

Note that the BFD-RS, the NCBI-RS, and the like may be interpreted as a radio link monitoring reference signal (RLM-RS (Radio Link Monitoring RS)).

In step S104, the UE that has identified the new candidate beam transmits a beam recovery request (Beam Failure Recovery reQuest (BFRQ)). The beam recovery request may be referred to as a beam recovery request signal, a beam failure recovery request signal, and the like.

The BFRQ may be transmitted on a random access channel (Physical Random Access Channel (PRACH)), for example. The BFRQ may include information of the new candidate beam identified in step S103. The resource for the BFRQ may be associated with the new candidate beam. Information of a beam may be notified by using a beam index (BI), the port index of a given reference signal, a resource index (for example, a CSI-RS resource indicator (CRI)), an SSB resource indicator (SSBRI), or the like.

For Rel. 15 NR, a study is underway about a CB-BFR (Contention-Based BFR), which is a BFR based on a contention-based random access (RA) procedure, and a CF-BFR (Contention-Free BFR), which is a BFR based on a contention-free random access procedure. In the CB-BFR and the CF-BFR, the UE may transmit, as the BFRQ, a preamble (also referred to as an RA preamble, a random access channel (Physical Random Access Channel (PRACH)), a RACH preamble, and the like) by using a PRACH resource.

In step S105, the base station that has detected the BFRQ transmits a response signal for the BFRQ from the UE (which may be referred to as a BFR response, a gNB response, and the like). The response signal may include reconfiguration information about one or a plurality of beams (for example, configuration information of a DL-RS resource(s)).

The response signal may be transmitted in a UE common search space on a PDCCH, for example. The response signal may be notified on a PDCCH (DCI) having a cyclic redundancy check (CRC) scrambled with the identifier of the UE (for example, a cell-radio RNTI (C-RNTI)). The UE may determine at least one of a transmit beam and a receive beam to be used, based on the beam reconfiguration information.

The UE may monitor the response signal, based on at least one of a control resource set (CORESET) for the BFR and a search space set for the BFR. For example, the UE may detect DCI having a CRC scrambled with the C-RNTI, in the BFR search space in a CORESET configured individually.

For the CB-BFR, when the UE has received a PDCCH corresponding to a C-RNTI related to the UE itself, it may be determined that contention resolution has been successful.

For the processing in step S105, a period for the UE to monitor a response from the base station (for example, the gNB) for the BFRQ may be configured. The period may be referred to as a gNB response window, a gNB window, a beam recovery request response window, a BFRQ response window, and the like, for example. When no gNB response is detected in the window period, the UE may retransmit the BFRQ.

In step S106, the UE may transmit a message indicating that a beam reconfiguration is completed, to the base station. The message may be transmitted on the PUCCH or may be transmitted on the PUSCH, for example.

In step S106, the UE may receive RRC signaling indicating a configuration of a TCI state to be used for the PDCCH or may receive a MAC control element (MAC CE (Medium Access Control Control Element)) indicating activation of the configuration.

Beam recovery success (BR success) may represent a case of reaching to step S106, for example. Meanwhile, beam recovery failure (BR failure) may correspond to a case where the number of times of BFRQ transmission has reached a given number or a beam-failure-recovery-timer is expired, for example.

Note that the numbers assigned to the steps are merely numbers given for description, and a plurality of steps may be integrated, or steps may be performed in a different order. Whether or not to perform BFR may be configured for the UE through higher layer signaling.

For future radio communication systems (for example, Rel. 16 or later versions), a study is underway to perform, when a beam failure is detected, notification of an occurrence of the beam failure and reporting of information related to the cell (or the CC) in which the beam failure is detected and information related to a new candidate beam, by using an uplink control channel (PUCCH) and a MAC control element (MAC CE).

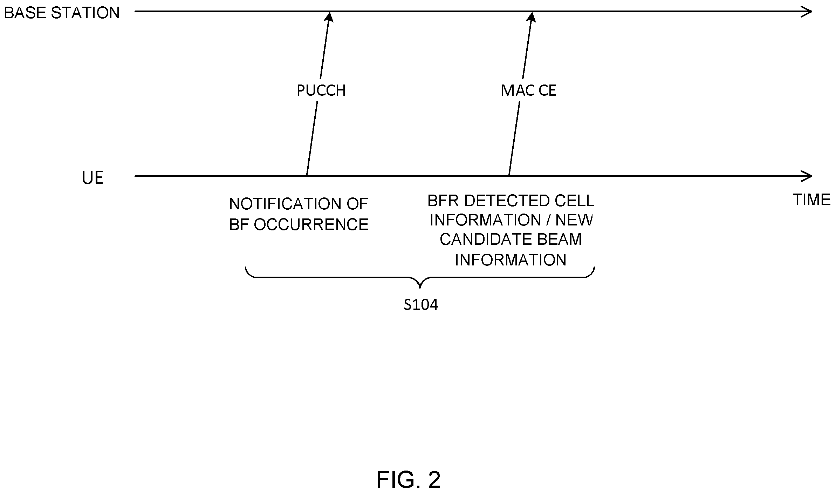

For example, it is conceivable that the UE performs, after a beam failure is detected, notification of an occurrence of the beam failure and reporting of information related to the cell in which the beam failure is detected and information related to a new candidate beam, through one or more steps (for example, two steps) (refer to FIG. 2). Note that such a reporting operation is not limited to two steps.

A resource(s) can be configured for the uplink control channel more flexibly than for the PRACH, in the time domain. For this reason, using the uplink control channel (PUCCH) as a channel used for transmission of the BFRQ is effective. A resource(s) can be configured for the MAC CE (PUSCH) more flexibly than for the PRACH, in the time domain. For this reason, it is also considered to use the MAC CE (PUSCH) as a channel used for transmission of the BFRQ.

In FIG. 2, the UE notifies of the occurrence of the beam failure on the uplink control channel (PUCCH) in the first step (or step 1). It is assumed that the UE reports at least one of the information related to the cell in which the beam failure is detected and the information related to the new candidate beam, by using a MAC control element (for example, a MAC CE) in the second step (or step 1).

The PUCCH in the first step may use, for example, a method similar to that for transmission of a scheduling request (SR) (dedicated SR-like PUCCH). The MAC CE in the second step may be transmitted on the uplink shared channel (PUSCH).

However, no sufficient study has been made about, in a case where the information related to the cell in which the beam failure is detected and information related to the new candidate beam are notified by using a MAC CE, how to perform transmission processing of the MAC CE (for example, the format of the MAC CE and the like). If the MAC CE is not transmitted appropriately, this may cause reduction in system performance such as delay in BFR.

The inventors of the present invention studied a format of a MAC CE (also described as a MAC control element) to be used for notification of information related to a cell in which a beam failure is detected and a new candidate beam, and came up with the idea of an aspect of the present invention.

Embodiments according to the present disclosure will be described in detail with reference to the drawings as follows. The following aspects may each be employed individually, or may be employed in combination.

Note that in the following description, a new candidate beam may be interpreted as a reference signal index, a reference signal ID, a reference signal resource index, or a reference signal resource ID.

(First Aspect)

In a first aspect, a description will be given of a configuration (for example, an LCID) of a MAC CE used for transmission of information related to the index of a cell (for example, a secondary cell) in which a beam failure is detected and a new candidate beam in the cell.

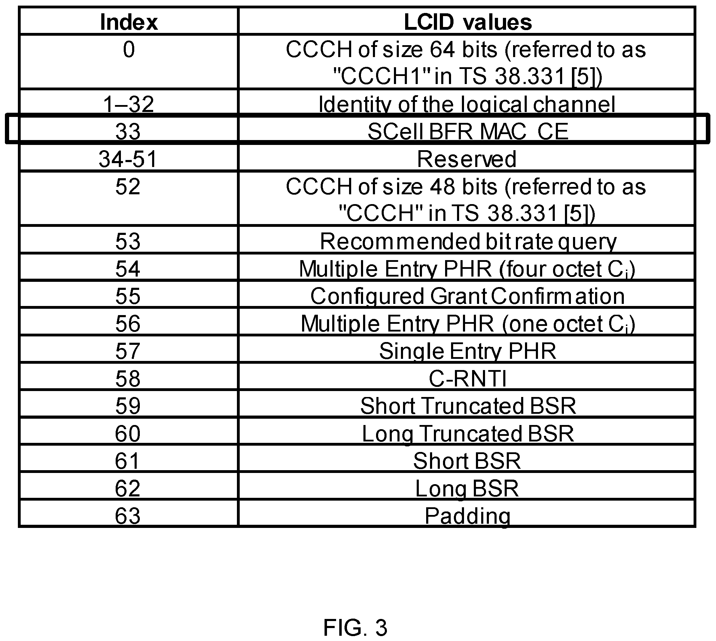

FIG. 3 shows an example of an LCID (Logical Channel Identifier) for a MAC CE (also referred to as a BFR MAC CE) used for transmission of information related to a cell (or a CC) in which a beam failure is detected and a new candidate beam (also referred to as beam failure detected cell/new candidate beam information below).

The MAC CE used for transmission in step 2 may be referred to as a BFR MAC CE, an SCell BFR MAC CE, and the like. The UE may transmit a MAC PDU (Protocol Data Unit) including a BFR MAC CE on the PUSCH.

A MAC header (more specifically, a MAC subheader) of the MAC PDU may include an LCID indicating a value (index) corresponding to the BFR MAC CE. The LCID may be defined by a value from "100001" to "101110" (or from 0 to 63), for example.

For example, the LCID indicating the value corresponding to the BFR MAC CE may be configured by using reserved bits of an LCID for another channel (for example, the UL-SCH). In the LCID for the UL-SCH in existing systems (for example, Rel. 15), indices 33 to 51 correspond to reserved bits. FIG. 3 shows a case where a given reserved bit (here, index 33) of the LCID for the UL-SCH is allocated to the BFR MAC CE.

By configuring the LCID corresponding to the BFR MAC CE as described above, it is possible to appropriately perform transmission in step 2 using the BFR MAC CE. Note that the case of using index 33 of the LCID for the UL-SCH is described here, but other indices may be used.

(Second Aspect)

In a second aspect, a description will be given of an example of a configuration (for example, a MAC CE format) of a MAC CE used for transmission of information related to the index of a cell (for example, a secondary cell) in which a beam failure is detected and a new candidate beam in the cell.

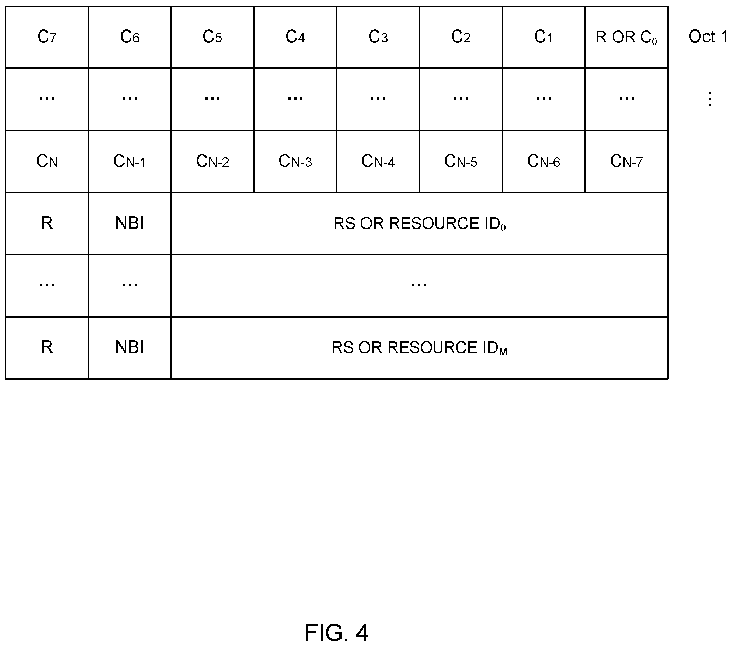

The format of the MAC CE used by the UE for transmission of beam failure detected cell/new candidate beam information may have a configuration including at least a first field indicating presence or absence of detection of a beam failure for each serving cell and a second field indicating information related to a new candidate beam for a cell in which a beam failure is detected (refer to FIG. 4).

The format shown in FIG. 4 includes the first field (here, $C_i$) indicating presence or absence of beam failure detection for each cell and the second field (here, RS or resource ID) indicating information related to a new candidate beam for a cell in which a beam failure is detected.

More specifically, the first field ($C_i$) may indicate whether or not a beam failure is detected in the cell corresponding to cell index i. The cell index may be the index of a secondary cell (SCellIndex) or may be the index of a serving cell (ServCellIndex).

For example, in a case where $C_i$ is configured at "1", this may indicate that a beam failure is detected in the cell having an index of i. In contrast, in a case where is configured at "0", this may indicate that a beam failure is not detected in the cell having an index of i. Note that "1" and "0" may be interchanged.

In a case where the MAC CE shown in FIG. 4 is used only in a BFR procedure for a secondary cell, the first field (for example, $C_0$) for the primary cell having an index of 0 (ServCellIndex i = 0) is not used. In such a case, the format of the MAC CE may have a configuration that $C_0$ configured for a given octet (here, Oct 1) is replaced with a reserved bit (R).

The second field (RS or resource ID) may be indicated by the index of a reference signal. In other words, the index of the reference signal may correspond to a new candidate beam. The reference signal may be at least one of a synchronization signal block (for example, an SS/PBCH block) and a reference signal for channel state information (CSI-RS).

The second field used for notification of the information related to a new candidate beam may be configured to correspond to the number of cells (for example, $C_1$ to $C_N$) configured in the MAC CE format. Alternatively, the second field may be configured to correspond to the number of cells in which a beam failure is detected. For example, in a case where a beam failure is detected in two cells (for example, the number of $C_i$ having "1" is two), second fields (two) corresponding to the respective cells may be configured.

In this case, the new candidate beam for the cell having a smaller index among the two cells in which a beam failure is detected (for example, $C_i$ having "1") may correspond to the second field (for example, RS or resource ID0) configured first. In addition, the new candidate beam for the cell having a greater index may correspond to the second field (for example, RS or resource ID1) configured next.

In a case where no reference signal (RS) having a received power (for example, L1-RSRP) of a given value or greater is detected in a cell in which the beam failure is detected, the UE may notify that no new candidate beam is present. In such a case, in the MAC CE format, a third field (for example, an NBI) indicating presence or absence of a new candidate beam may be configured.

The third field (NBI) may indicate whether or not a new candidate beam (or a reference signal having an LI-RSRP of a given value or greater) is present for the cell in which the beam failure is detected.

For example, in a case where the NBI is configured at "1", this may indicate that no new candidate beam is present. In such a case, no corresponding second field (RS or resource ID) is present, and hence the second field may be configured to have a given bit (for example, 0). Alternatively, in a case where the NBI is configured at "1", the base station may determine that no new candidate beam is present and ignore the corresponding second field.

In a case where the NBI is configured at "0", this may indicate that a new candidate beam is present. In such a case, the corresponding second field (RS or resource ID) may be configured to have a bit value corresponding to the new candidate beam. Note that "1" and "0" may be appropriately interchanged in the third field (NBI).

Such a configuration in which no third field (NBI) is configured (or combine the third field and the second field) may be employed. In such a case, a given bit value (for example, 0) in the second field may indicate that no new candidate beam is present (for example, NBI = "1"). In this case, it is possible to use a bit(s) of the third field (NBI) and the second field in combination, which can improve bit utilization efficiency.

<Number of Cells to Configure>

In the MAC CE format, the number (the number of cells) configured as a first field(s) ($C_i$) may be any one of a maximum number N of secondary cells to which the UE is connectable (option a) and the number of secondary cells or the number of serving cells to be actually configured for the UE (option b).

[Option a]

$C_i$ corresponding to the maximum number N (here, N = 31) of secondary cells to which the UE is connectable may be configured. In such a case, $C_i$ may be configured in four lines (for example, Oct 1 to Oct 4) in the MAC CE format.

[Option b]

$C_i$ configured for the MAC CE may be changed according to the number of secondary cells actually configured for the UE (or with which the UE establishes a connection). The secondary cell(s) or the serving cell(s) configured for the UE may be determined based on higher layer signaling.

Assume that the number of secondary cells configured for the UE is N_conf. In this case, the UE may determine that the serving cells correspond to N_conf+1. In a case where the number of $C_i$ configured for the MAC CE is assumed to be N, the UE may determine N, based on option b-1 or b-2 below.

- Option b-1

In option b-1, N may be determined based on Equation (1) below. In this case, N is selected from {7, 15, 23, 31}, and $C_i$ is configured for the MAC CE so that the number of $C_i$ is greater than N_conf.

Equation (1)

$$N = \left\lfloor \frac{N\_conf}{8} \right\rfloor * 8 + 7$$

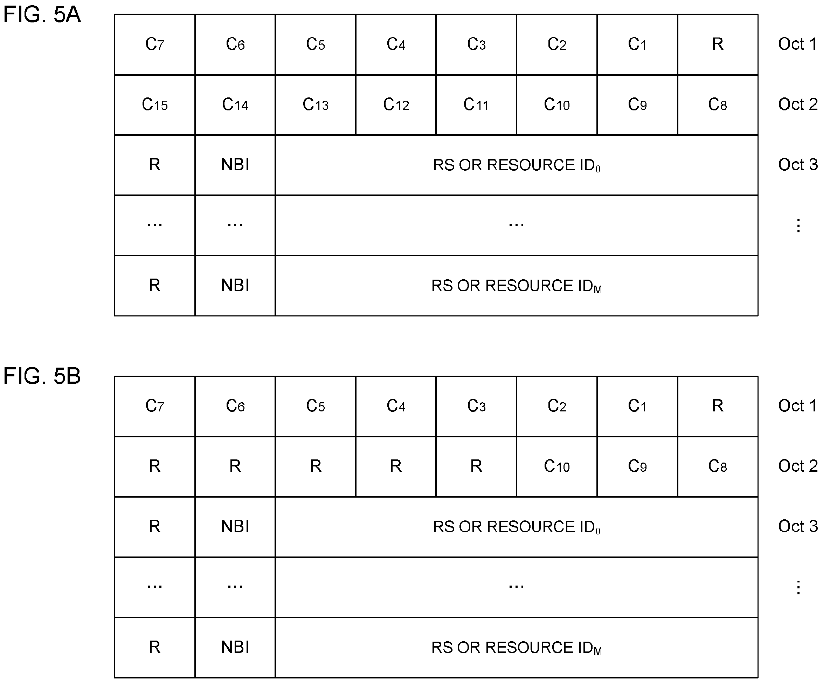

FIG. 5A is a diagram to show an example of a MAC CE format in a case where N_conf = 10. In such a case, the number of $C_i$ ($C_1$ to $C_{15}$) greater than the number of secondary cells (ten) configured for the UE is configured. Note that secondary cells corresponding to $C_{11}$ to $C_{15}$ are not configured for the UE, and hence the UE may configure $C_{11}$ to $C_{15}$ at a given bit (for example, "0"). Alternatively, the UE and the base station may ignore $C_{11}$ to $C_{15}$.

- Option b-2

In option b-2, N may be determined by assuming that N = N_conf. In this case, N is selected from 1 to 31, and $C_i$ the number of which is equal to N_conf are configured.

FIG. 5B is a diagram to show an example of the MAC CE format in the case where N_conf = 10. In such a case, $C_i$ ($C_1$ to $C_{10}$) the number of which is equal to the number of secondary cells (ten) configured for the UE are configured. Note that a reserved bit may be configured in each field in which no $C_i$ is configured in a line (or an octet) determined based on Expression (2) below.

Expression (2)

$$\left( \left\lfloor \frac{N_{conf}}{8} \right\rfloor + 1 \right)$$

FIG. 5B shows a case where a reserved bit is configured in each field after $C_{10}$ in Oct 2. The reserved bit may be configured at a given bit (for example, "0").

By determining $C_i$ to be configured for the MAC CE, according to a secondary cell(s) or a serving cell(s) configured for the UE as described above, resource utilization efficiency can be improved.

<Size of Field for New Candidate Beam Notification>

The size of the second field (for example, RS or resource ID) for notifying of the information related to the new candidate beam may be determined based on the number of supported candidate beams (or reference signals). The information related to the number of candidate beams (or the maximum number of candidate beams) supported by the UE may be notified from a network (for example, the base station) to the UE through higher layer signaling or the like.

In a case where the maximum number of candidate beams is 64, the size of the second field may be configured of 6 bits (refer to FIG. 4, for example).

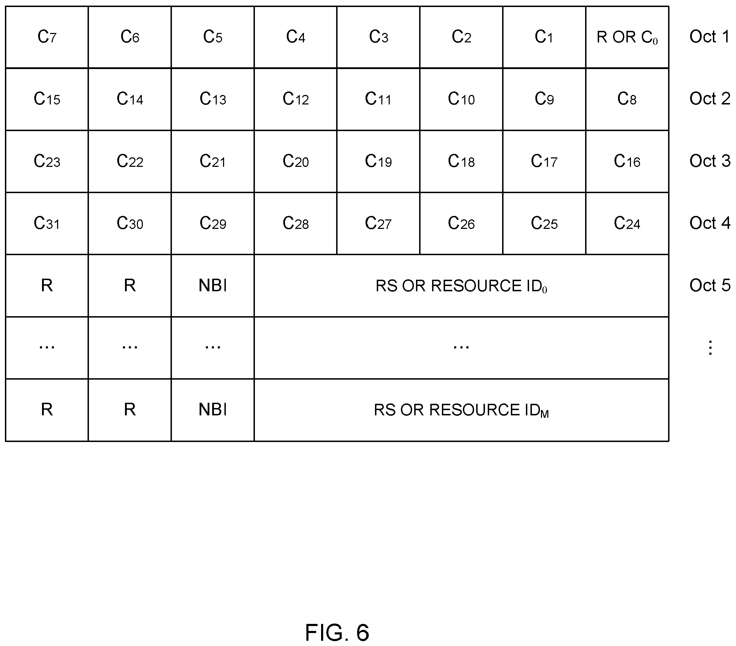

Alternatively, in a case where the maximum number of candidate beams is 32, the size of the second field may be adjusted to the number of bits smaller than six. FIG. 6 shows a case where the size of the second field is configured of 5 bits.

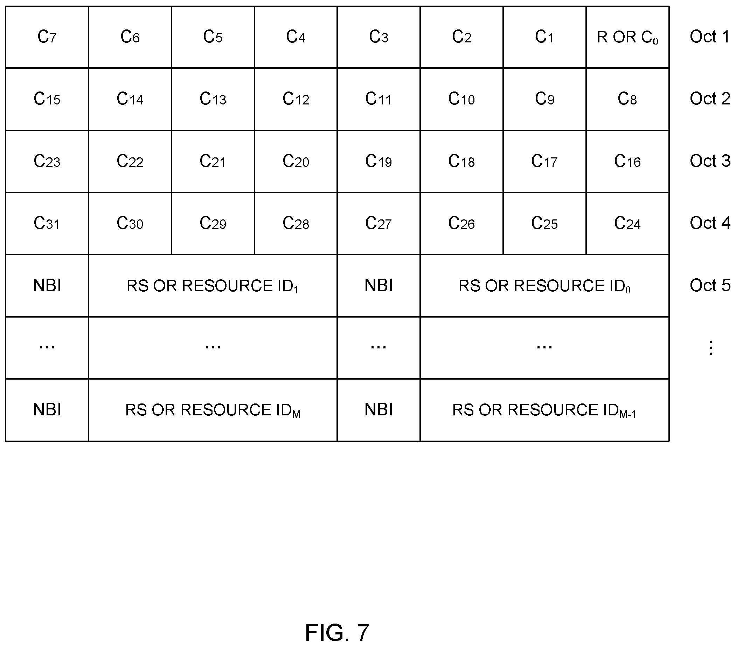

In a case where the maximum number of candidate beams is 8, the size of the second field may be adjusted to the number of bits smaller than six. FIG. 7 shows a case where the size of the second field is configured of 3 bits. In this case, a plurality of (here, two) second fields corresponding to different cells can be configured in the same line (or the same octet).

Note that FIGS. 6 and 7 show a case where $C_1$ to $C_{31}$ are configured as the first fields, but $C_i$ to be con-

figured may be adjusted based on the number of secondary cells or serving cells configured for the UE.

By adjusting the size of the second field to be configured for the MAC CE, based on the number of candidate beams (or the maximum candidate beams) supported by the UE as described above, the resource utilization efficiency can be improved.

(Third Aspect)

In a third aspect, a description will be given of an example of a configuration (for example, a MAC CE format) of a MAC CE used for transmission of information related to a new candidate beam using a plurality of reference signals (or reference signal indices).

The UE may determine a new candidate beam by using a plurality of reference signals. The plurality of reference signals may be a synchronization signal block (for example, an SS/PBCH block or an SSB) and a CSI-RS. Applicable reference signals are by no means limited to these.

It is also conceivable to separately configure, for each reference signal, the number of RS resources (or the number of indices) the UE can support. For example, in Rel. 15, 64 SSB indices (indices 0 to 63) at maximum and 192 CSI-RS indices (indices 0 to 191) at maximum are supported as reference signals corresponding to candidate beams.

In such a case, it is desired to have a configuration that at least one of a given number of SSB indices and a given number of CSI-RS indices are notified for a new candidate beam by using the MAC CE. In view of this, in the third aspect, a MAC CE format possible to notify of resources of a plurality of reference signals as a new candidate beam will be described.

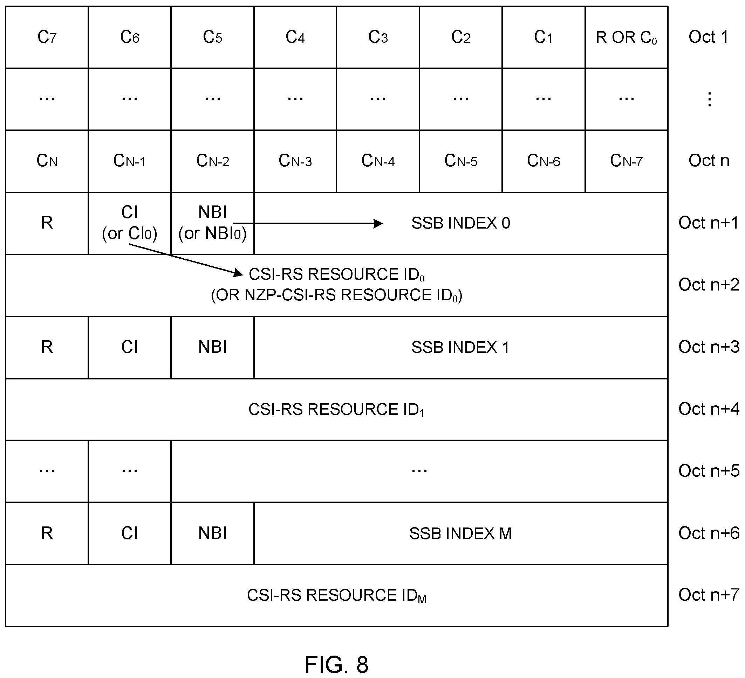

FIG. 8 shows an example of a MAC CE format in which fields for notifying of respective indices of a plurality of reference signals are supported. Here, fields corresponding to two reference signals (SSB and CSI-RS) are configured. For example, it may be assumed that fields corresponding to two respective reference signals are configured as second fields for notifying of the information related to a new candidate beam.

The field for notifying the index of a first RS (for example, an SSB) and a field for notifying the index of a second RS (for example, CSI-RS) may be configured in different octets (for example, Oct n+1 and Oct n+2). Moreover, at least one of NBI and CI may be configured in the same octet (for example, Oct n+1) as the octet in which the reference signal (for example, SSB) with a smaller number of candidate beams (or a smaller number of maximum candidate beams) being configured is configured.

The NBI may indicate whether or not a new candidate beam based on the SSB (or the SSB having an LI-RSRP of a given value or greater) is present in the cell in which a beam failure is detected.

In a case where the NBI (or $NBI_j$) is configured

at "1", this may indicate that no new candidate beam based on the SSB is present. In such a case, no SSB index notified in the corresponding second field for the SSB (for example, the SSB index) is present, and hence the second field may be configured to have a given bit (for example, 0). Alternatively, in a case where the NBI is configured at "1", the base station may determine that no new candidate beam is present and ignore the corresponding second field.

In a case where the NBI is configured at "0", this may indicate that a new candidate beam based on the SSB is present. In such a case, the corresponding second field for the SSB (for example, the SSB index) may be configured to have a bit value corresponding to the new candidate beam. In this case, the bit value corresponding to a new candidate beam for a given secondary cell (for example, the j+1-th SCell) with the first field ($C_i$) being configured at "1" is configured in the second field.

FIG. 8 shows a case where the NBI in Oct n+1 indicates presence or absence of a new candidate beam in the second field for the SSB in the same octet. Note that "1" and "0" may be appropriately interchanged in the third field (NBI).

Such a configuration as to have no third field (NBI) (or combine the third field and the second field for the SSB) may be employed. In such a case, a given bit value (for example, 0) in the second field for the SSB may indicate that no new candidate beam is present (for example, NBI = "1"). In this case, it is possible to use a bit(s) of the third field (NBI) and the second field in combination, which can improve bit utilization efficiency.

The CI may indicate whether or not a second field for the second reference signal (for example, the CSI-RS) (or a new candidate beam based on the CSI-RS) is present. The CI may be referred to as a fourth field.

In a case where the CI (or $CI_j$) is configured at "1", this may indicate that no second field for the CSI-RS (for example, the CSI-RS resource ID) or no new candidate beam based on the CSI-RS the is present. In such a case, no corresponding second field for the CSI-RS (for example, the CSI-RS resource ID) is present. In other words, in this case, a configuration that no second filed for the CSI-RS is configured in the octet (for example, Oct n+2 in FIG. 8) may be employed.

In a case where the CI is configured at "0", this may indicate that a new candidate beam based on the CSI-RS is present. In such a case, the bit value corresponding to the new candidate beam may be configured in the corresponding second field for the CSI-RS (for example, the CSI-RS resource ID). In this case, the bit value corresponding to a new candidate beam for a given secondary cell (for example, the j+1-th SCell) with the first field ($C_i$) being configured at "1" is configured in the second field.

The second field for the CSI-RS (for example, the CSI-RS resource ID) may be the index of a non-zero power CSI-RS (NZP-CSI-RS) .

In the MAC CE format shown in FIG. 8, a configuration may be employed that an octet with the second field for the SSB being configured is always configured and an octet with the second field for the CSI-RS being configured based on the corresponding CI is configured. The second field for the SSB and the second field for the CSI-RS may be configured only for the cell corresponding to a cell in which a beam failure has occurred (for example, $C_i = 1$).

In a case where a new candidate beam is present in the second field for the SSB (NBI = 0), no second field for the CSI-RS may be configured (CI = 1). For example, a configuration may be employed that, in a case where no new candidate beam is present in the second field for the SSB, the second field for the CSI-RS is allowed to be configured. Alternatively, a new candidate beam may be notified by using both the second field for the SSB and the second field for the CSI-RS.

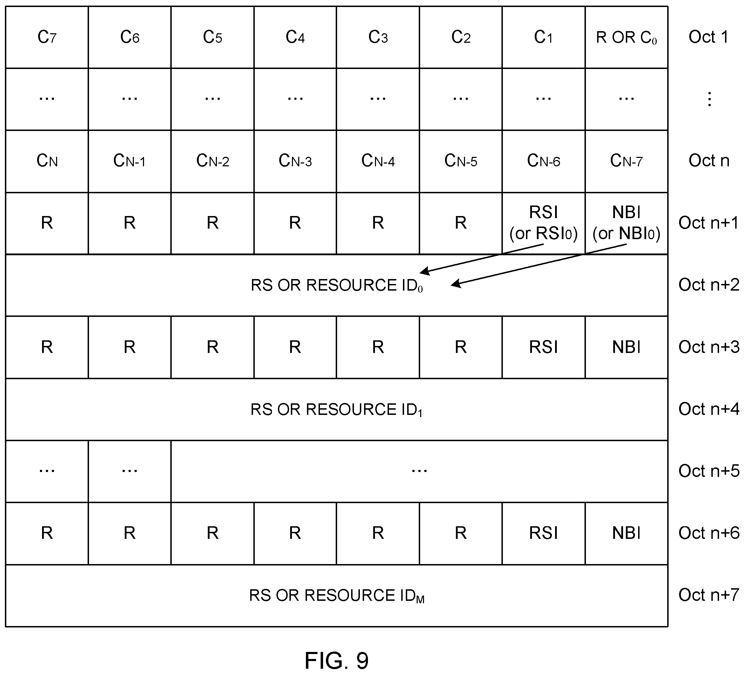

FIG. 8 shows a case where a field is separately configured (or supported) for each reference signal. However, a configuration may be employed that a resource index of a given reference signal among a plurality of reference signals is notified by using a common field (for example, FIG. 9).

In FIG. 9, a field for notifying the type (kind) of a reference signal (fifth field) may be configured to specify, a reference signal to be notified as a new candidate beam, by using the fifth field (for example, the RSI). In the following description, an SSB and a CSI-RS are given as examples of reference signals, but the types of the reference signals are not limited to these.

In the MAC CE format shown in FIG. 9, a field for notifying the index of the first RS (for example, the SSB) and a field for notifying the index of the second RS (for example, the CSI-RS) are configured in common (for example, Oct n+2). Shown is a case where the NBI indicating the presence or absence of the field for a reference signal (or the presence or absence of a new candidate beam based on the SSB or a new candidate beam based on the CSI-RS) and the RSI indicating the type of the reference signal are configured in an octet (here, Oct n+1) different from that for the second field.

By configuring the third field (NBI) and the fifth field (RSI) in a different octet from that for the second field (for example, the RS or resource ID), it is possible to increase the number of bits in the second field. This makes it possible to support a case with a large number of new candidate beams. Note that, depending on the number of candidate beams (or the maximum number of candidate beams), the second field (for example, the RS or resource ID), the third field (NBI), and the fifth field (RSI) may be configured in the same octet.

The NBI may indicate whether or not a new candidate beam based on the SSB or the CSI-RS (or the SSB or the CSI-RS having an LI-RSRP of a given value or greater) is present in the cell in which a beam failure is detected. In other words, the NBI may indicate whether the second field corresponding to the cell in which the beam failure is detected is present.

For example, in a case where the NBI (or $NBI_j$) is configured at "1", this may indicate that no new candidate beam based on the SSB or the CSI-RS is present. In such a case, no SSB index or CSI-RSID notified in the corresponding second field is present, and hence a configuration that no second field is configured may be employed.

In a case where the NBI is configured at "0", this may indicate that a new candidate beam based on the SSB or the CSI-RS is present. In such a case, the UE may configure the index corresponding to the reference signal selected based on the RSI, in the second field. In this case, the bit value corresponding to a new candidate beam for a given secondary cell (for example, the j+1-th SCell) with the first field ($C_i$) being configured at "1" (for example, the reference signal index specified by the RSI) is configured in the second field.

The RSI may indicate the type of the reference signal to be configured in the second field. The UE may assume that, in a case where the RSI (or the $RSI_j$) is configured at "0", the second field corresponds to the SSB index (for example, 0 to 63). Meanwhile, the UE may assume that, in a case where the RSI is configured at "1", the second field corresponds to the CSI-RS resource ID (for example, 0 to 191).

In a case where the NBI is configured at 1 (a case where no second filed is present), the UE or the base station may ignore the RSI.

By configuring a common field for a plurality of reference signals and specifying the type of a corresponding reference signal by using another field (for example, RSI) as described above, resource utilization efficiency can be improved.

<Variations>

FIG. 9 shows a case where the third field (NBI) and the fifth field (RSI) are configured in a given octet (for example, Oct n+1) and other fields are configured of reserved bits. However, the configuration is not limited to this. A field to be used for another usage may be configured in the octet in which the third field and the fifth field are configured.

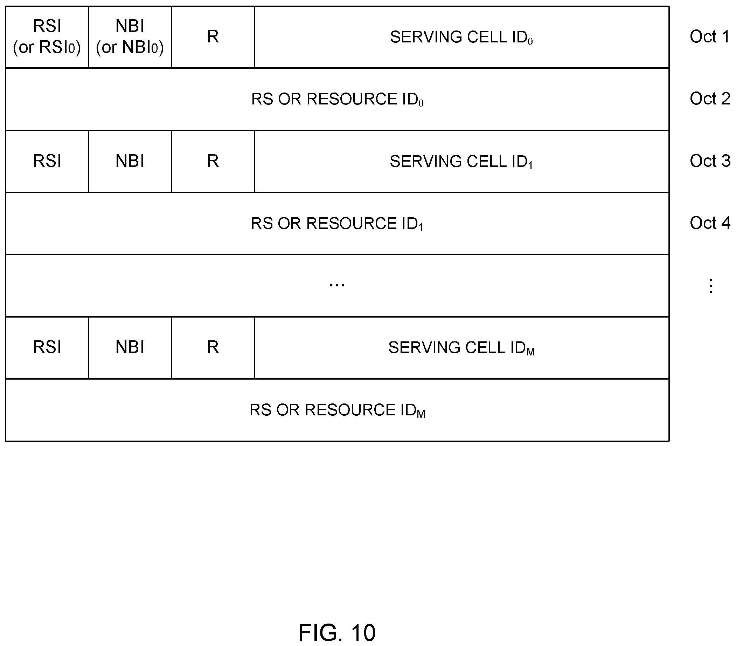

FIG. 10 shows a case where a field for a serving cell ID (sixth field) is configured in the octet in which the third field and the fifth field are configured (for example, Oct 1 and the like). In this case, instead of the first field ($C_i$) used for notification of a cell in which a beam failure is detected, the sixth field is configured.

The sixth field (Serving cell ID) may have a configuration that a specific serving cell ID (or secondary cell ID) for which a beam failure is detected is indicated with bit values. For example, in a case where the number of serving cells supported by the UE is 32, configuring the sixth field with 5 bits makes it possible to specify each of all cells. Note that the number of bits of the sixth field may be adjusted based on the number of cells configured for the UE.

The UE may have a configuration that the sixth field is configured depending on the number of cells in which a beam failure is detected. In this case, the size of the MAC CE can be adjusted based on the number of cells in which the UE has detected a beam failure (or for which the UE notifies a beam failure).

Note that, in FIG. 10, other fields may be configured similarly to FIG. 9. The number of bits of each field may be appropriately changed.

By configuring the field for a serving cell ID (sixth field) in the octet in which the third field and the fifth field are configured (for example, Oct 1 or the like) as described above, resource utilization efficiency can be improved.

(Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

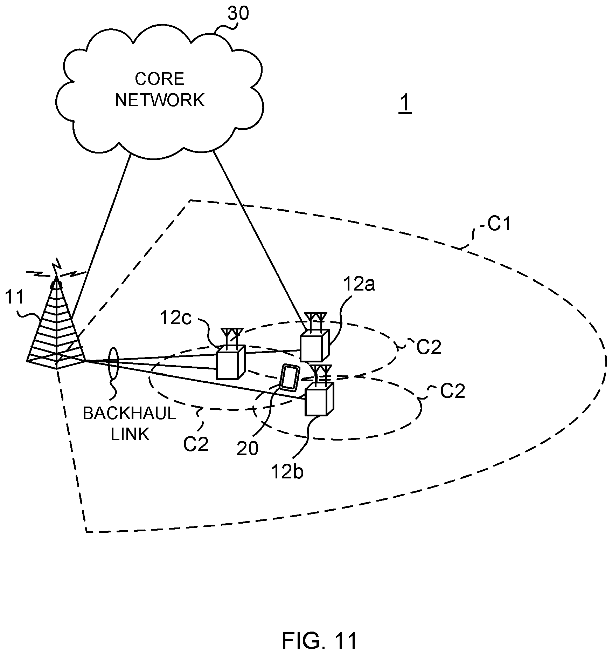

FIG. 11 is a diagram to show an example of a schematic structure of the radio communication system according to one embodiment. The radio communication system 1 may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a given search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be also referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be also referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

(Base Station)

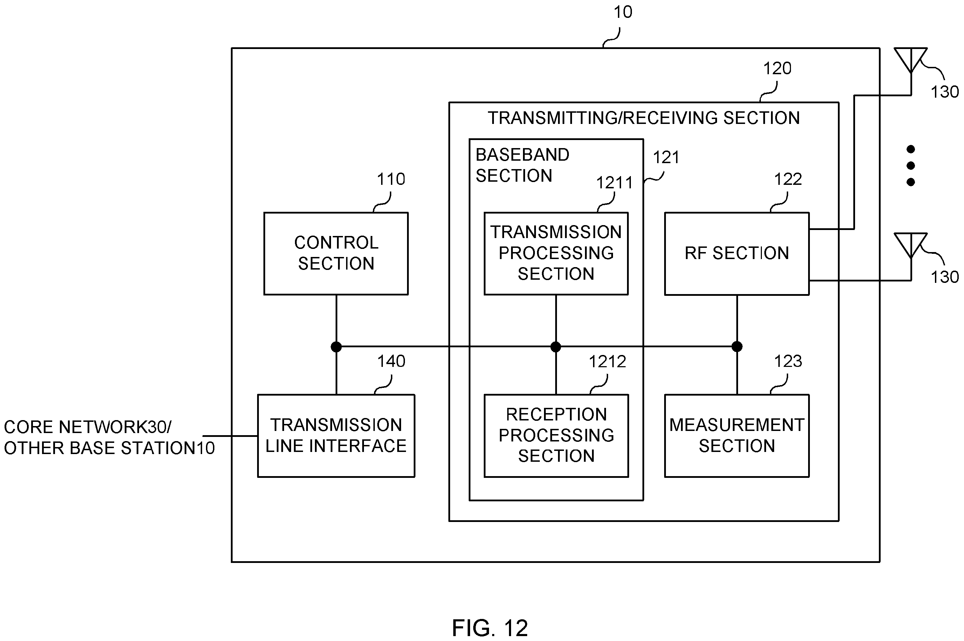

FIG. 12 is a diagram to show an example of a structure of the base station according to one embodiment. The base station 10 includes a control section 110, a transmitting/receiving section 120, transmitting/receiving antennas 130 and a transmission line interface 140. Note that the base station 10 may include one or more control sections 110, one or more transmitting/receiving sections 120, one or more transmitting/receiving antennas 130, and one or more transmission line interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the transmission line interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, demapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The transmission line interface 140 may perform transmission/reception (backhaul signaling) of a signal with an apparatus included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the transmission line interface 140.

The transmitting/receiving section 120 may receive information related to a cell in which a beam failure is detected or a new candidate beam, by using a MAC control element.

(User Terminal)

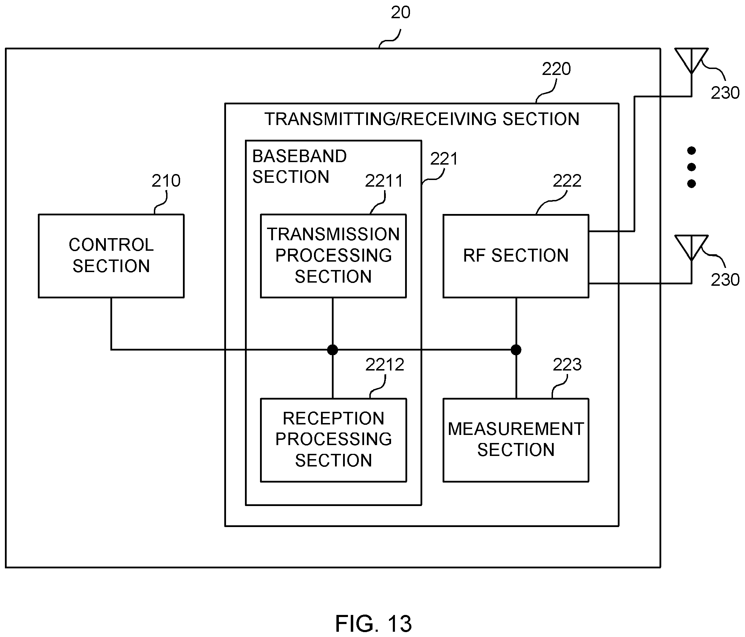

FIG. 13 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a given channel (for example, PUSCH), the DFT processing as the above-described transmission processing to transmit the channel by using a DFT-s-OFDM waveform if transform precoding is enabled, and otherwise, does not need to perform the DFT processing as the above-described transmission process.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply a receiving process such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220 and the transmitting/receiving antennas 230.

Note that the transmitting/receiving section 220 may transmit information related to a cell in which a beam failure is detected or a new candidate beam, by using a MAC control element.

The control section 210 controls detection of a beam failure. The control section 210 may perform control to transmit the information related to a cell in which a beam failure is detected or a new candidate beam, by using a given format of the MAC control element.

The format of the MAC control element may have a configuration including at least a first field indicating presence or absence of detection of a beam failure for each serving cell and a second field indicating information related to a new candidate beam for a cell in which a beam failure is detected. The format of the MAC control element may have a configuration of further including a third field indicating presence or absence of the new candidate beam.

A configuration may be employed that the format of the MAC control element in which a given bit value of the second field may indicate that no new candidate beam is present.

A configuration may be employed that the number of second fields configured in the format of the MAC control element is adjusted based on the number of cells in which the UE has detected a beam failure.

A configuration may be employed that the format of the MAC control element further includes a fourth field indicating presence or absence of the second field or a fifth field indicating the type of a reference signal corresponding to the new candidate beam.

(Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining softwares into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

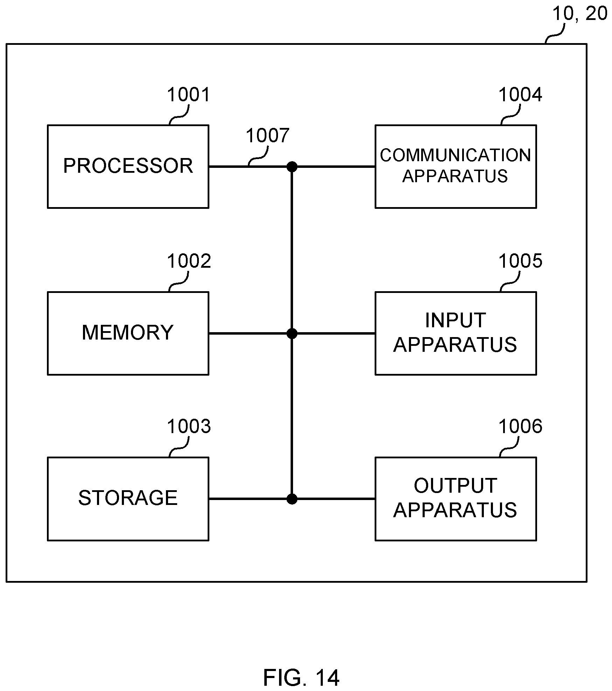

For example, a base station, a user terminal, and so on according to one embodiment of the present disclosure may function as a computer that executes the processes of the radio communication method of the present disclosure. FIG. 14 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the user terminal 20 may be configured to include one or more of apparatuses shown in the drawings, or may be configured not to include part of apparatuses.

For example, although only one processor 1001 is shown, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminals 20 is implemented, for example, by allowing given software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least part of the above-described control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving section 120 (220), the transmitting/receiving antennas 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the user terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

(Variations)

Note that the terminology described in the present disclosure and the terminology that is needed to understand the present disclosure may be replaced by other terms that convey the same or similar meanings. For example, a "channel," a "symbol," and a "signal" (or signaling) may be interchangeably interpreted. Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a given signal or channel. For example, numerology may indicate at least one of a subcarrier spacing (SCS), a bandwidth, a symbol length, a cyclic prefix length, a transmission time interval (TTI), the number of symbols per TTI, a radio frame structure, a particular filter processing performed by a transceiver in the frequency domain, a particular windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI," a plurality of consecutive subframes may be referred to as a "TTI," or one slot or one mini-slot may be referred to as a "TTI." That is, at least one of a subframe and a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a base station schedules the allocation of radio resources (such as a frequency bandwidth and transmit power that are available for each user terminal) for the user terminal in TTI units. Note that the definition of TTIs is not limited to this.

TTIs may be transmission time units for channel-encoded data packets (transport blocks), code blocks, or codewords, or may be the unit of processing in scheduling, link adaptation, and so on. Note that, when TTIs are given, the time interval (for example, the number of symbols) to which transport blocks, code blocks, codewords, or the like are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot" and so on. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for given numerology in a given carrier. Here, a common RB may be specified by an index of the RB based on the common reference point of the carrier. A PRB may be defined by a given BWP and may be numbered in the BWP.

The BWP may include a UL BWP (BWP for the UL) and a DL BWP (BWP for the DL). One or a plurality of BWPs may be configured in one carrier for a UE.

At least one of configured BWPs may be active, and a UE does not need to assume to transmit/receive a given signal/channel outside active BWPs. Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to given values, or may be represented in another corresponding information. For example, radio resources may be specified by given indices.

The names used for parameters and so on in the present disclosure are in no respect limiting. Furthermore, mathematical expressions that use these parameters, and so on may be different from those expressly disclosed in the present disclosure. For example, since various channels (PUCCH, PDCCH, and so on) and information elements can be identified by any suitable names, the various names allocated to these various channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Reporting of information is by no means limited to the aspects/embodiments described in the present disclosure, and other methods may be used as well. For example, reporting of information in the present disclosure may be implemented by using physical layer signaling (for example, downlink control information (DCI), uplink control information (UCI), higher layer signaling (for example, Radio Resource Control (RRC) signaling, broadcast information (master information block (MIB), system information blocks (SIBs), and so on), Medium Access Control (MAC) signaling and so on), and other signals or combinations of these.

Note that physical layer signaling may be referred to as "Layer 1/Layer 2 (L1/L2) control information (L1/L2 control signals)," "L1 control information (L1 control signal)," and so on. Also, RRC signaling may be referred to as an "RRC message," and can be, for example, an RRC connection setup message, an RRC connection reconfiguration message, and so on. Also, MAC signaling may be reported using, for example, MAC control elements (MAC CEs).

Also, reporting of given information (for example, reporting of "X holds") does not necessarily have to be reported explicitly, and can be reported implicitly (by, for example, not reporting this given information or reporting another piece of information).

Determinations may be made in values represented by one bit (0 or 1), may be made in Boolean values that represent true or false, or may be made by comparing numerical values (for example, comparison against a given value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables,

digital subscriber lines (DSL), and so on) and wireless technologies (infrared radiation, microwaves, and so on), at least one of these wired technologies and wireless technologies are also included in the definition of communication media.

The terms "system" and "network" used in the present disclosure can be used interchangeably. The "network" may mean an apparatus (for example, a base station) included in the network.

In the present disclosure, the terms such as "precoding," a "precoder," a "weight (precoding weight)," "quasi-co-location (QCL)," a "Transmission Configuration Indication state (TCI state)," a "spatial relation," a "spatial domain filter," a "transmit power," "phase rotation," an "antenna port," an "antenna port group," a "layer," "the number of layers," a "rank," a "resource," a "resource set," a "resource group," a "beam," a "beam width," a "beam angular degree," an "antenna," an "antenna element," a "panel," and so on can be used interchangeably.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be device mounted on a moving object or a moving object itself, and so on. The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor, and the like.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)," "Vehicle-to-Everything (V2X)," and the like). In this case, user terminals 20 may have the functions of the base stations 10 described above. The words "uplink" and "downlink" may be interpreted as the words corresponding to the terminal-to-terminal communication (for example, "side"). For example, an uplink channel, a downlink channel and so on may be interpreted as a side channel.

Likewise, the user terminal in the present disclosure may be interpreted as base station. In this case, the base station 10 may have the functions of the user terminal 20 described above.

Actions which have been described in the present disclosure to be performed by a base station may, in some cases, be performed by upper nodes. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be reordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced based on these. A plurality of systems may be combined (for example, a combination of LTE or LTE-A and 5G, and the like) and applied.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "judging (determining)" as in the present disclosure herein may encompass a wide variety of actions. For example, "judging (determining)" may be interpreted to mean making "judgments (determinations)" about judging, calculating, computing, processing, deriving, investigating, looking up, search and inquiry (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

In addition, "judging (determining)" may be interpreted as "assuming," "expecting," "considering," and the like.

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other." Note that the phrase may mean that "A and B is each different from C." The terms "separate," "be coupled," and so on may be interpreted similarly to "different."

When terms such as "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a," "an," and "the" in the English language is added by translation, the present disclosure may include that a noun after these articles is in a plural form.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of claims. Consequently, the description of the present disclosure is provided only for the purpose of explaining examples, and should by no means be construed to limit the invention according to the present disclosure in any way.

**Claims**

1.  A terminal comprising:

    a control section that controls detection of a beam failure; and
a transmitting section that transmits information related to a cell in which the beam failure is detected and a new candidate beam, by using a MAC control element, wherein
a format of the MAC control element includes at least a first field indicating presence or absence of detection of the beam failure for each cell and a second field indicating information related to a new candidate beam for a cell in which the beam failure is detected.

2.  The terminal according to claim 1, wherein the format of the MAC control element further includes a third field indicating presence or absence of the new candidate beam.

3.  The terminal according to claim 1, wherein a given bit value of the second field indicates that no new candidate beam is present.

4.  The terminal according to any one of claims 1 to 3, wherein the number of the second fields configured in the format of the MAC control element is adjusted based on the number of cells in which the beam failure is detected.

5.  The terminal according to any one of claims 1 to 4, wherein the format of the MAC control element further includes a fourth field indicating presence or absence of the second field or a fifth field indicating a type of a reference signal corresponding to the new candidate beam.

6.  A radio communication method comprising:

    controlling detection of a beam failure; and
    transmitting information related to a cell in which the beam failure is detected and a new candidate beam, by using a MAC control element, wherein
    a format of the MAC control element includes at least a first field indicating presence or absence of detection of the beam failure for each cell and a second field indicating information related to a new candidate beam for a cell in which the beam failure is detected.

TRANSMISSION OF SIGNAL
FOR SEARCHING FOR NEW
CANDIDATE BEAM

SWEEPING OF
RECEIVE BEAM

BEAM
RECONFIGURATION
INFORMATION

BASE
STATION

SS BLOCK /
CSI-RS

SS BLOCK /
CSI-RS

SS BLOCK /
CSI-RS

PRACH

PDCCH

PUCCH/
PUSCH

OCCURRENCE OF
INTERFERENCE

UE

TIME

DETECTION OF
BEAM FAILURE

IDENTIFICATION
OF NEW
CANDIDATE BEAM

NOTIFICATION OF
BF OCCURRENCE /
REPORT OF NEW
CANDIDATE BEAM

MONITORING OF
RESPONSE FROM
BASE STATION

TRANSMISSION OF
COMPLETION OF BEAM
RECONFIGURATION

S101

S102

S103

S104

S105

S106

FIG. 1

BASE STATION ────────────────────────────────────────────────────►

PUCCH          MAC CE

UE ────────────────────────────────────────────────────►
                                                              TIME

NOTIFICATION OF          BFR DETECTED CELL
BF OCCURRENCE            INFORMATION / NEW
                         CANDIDATE BEAM
                         INFORMATION

S104

FIG. 2

EP 4 017 080 A1

| Index | LCID values |
|-------|-------------|
| 0 | CCCH of size 64 bits (referred to as "CCCH1" in TS 38.331 [5]) |
| 1–32 | Identity of the logical channel |
| 33 | SCell BFR MAC CE |
| 34-51 | Reserved |
| 52 | CCCH of size 48 bits (referred to as "CCCH" in TS 38.331 [5]) |
| 53 | Recommended bit rate query |
| 54 | Multiple Entry PHR (four octet $C_i$) |
| 55 | Configured Grant Confirmation |
| 56 | Multiple Entry PHR (one octet $C_i$) |
| 57 | Single Entry PHR |
| 58 | C-RNTI |
| 59 | Short Truncated BSR |
| 60 | Long Truncated BSR |
| 61 | Short BSR |
| 62 | Long BSR |
| 63 | Padding |

FIG. 3

| C7 | C6 | C5 | C4 | C3 | C2 | C1 | R OR C$_0$ | Oct 1 |
|---|---|---|---|---|---|---|---|---|
| ... | ... | ... | ... | ... | ... | ... | ... | ⋮ |
| C$_N$ | C$_{N-1}$ | C$_{N-2}$ | C$_{N-3}$ | C$_{N-4}$ | C$_{N-5}$ | C$_{N-6}$ | C$_{N-7}$ | |
| R | NBI | RS OR RESOURCE ID$_0$ | | | | | | |
| ... | ... | ... | | | | | | |
| R | NBI | RS OR RESOURCE ID$_M$ | | | | | | |

FIG. 4

FIG. 5A

| C7 | C6 | C5 | C4 | C3 | C2 | C1 | R | Oct 1 |
|----|----|----|----|----|----|----|----|----|
| $C_{15}$ | $C_{14}$ | $C_{13}$ | $C_{12}$ | $C_{11}$ | $C_{10}$ | $C_9$ | $C_8$ | Oct 2 |
| R | NBI | RS OR RESOURCE $ID_0$ | | | | | | Oct 3 |
| ... | ... | ... | | | | | | ⋮ |
| R | NBI | RS OR RESOURCE $ID_M$ | | | | | | |

FIG. 5B

| C7 | C6 | C5 | C4 | C3 | C2 | C1 | R | Oct 1 |
|----|----|----|----|----|----|----|----|----|
| R | R | R | R | R | $C_{10}$ | $C_9$ | $C_8$ | Oct 2 |
| R | NBI | RS OR RESOURCE $ID_0$ | | | | | | Oct 3 |
| ... | ... | ... | | | | | | ⋮ |
| R | NBI | RS OR RESOURCE $ID_M$ | | | | | | |

EP 4 017 080 A1

EP 4 017 080 A1

| $C_7$ | $C_6$ | $C_5$ | $C_4$ | $C_3$ | $C_2$ | $C_1$ | R OR $C_0$ | Oct 1 |
|---|---|---|---|---|---|---|---|---|
| $C_{15}$ | $C_{14}$ | $C_{13}$ | $C_{12}$ | $C_{11}$ | $C_{10}$ | $C_9$ | $C_8$ | Oct 2 |
| $C_{23}$ | $C_{22}$ | $C_{21}$ | $C_{20}$ | $C_{19}$ | $C_{18}$ | $C_{17}$ | $C_{16}$ | Oct 3 |
| $C_{31}$ | $C_{30}$ | $C_{29}$ | $C_{28}$ | $C_{27}$ | $C_{26}$ | $C_{25}$ | $C_{24}$ | Oct 4 |
| R | R | NBI | RS OR RESOURCE $ID_0$ | | | | | Oct 5 |
| ... | ... | ... | ... | | | | | ⋮ |
| R | R | NBI | RS OR RESOURCE $ID_M$ | | | | | |

FIG. 6

| $C_7$ | $C_6$ | $C_5$ | $C_4$ | $C_3$ | $C_2$ | $C_1$ | R OR $C_0$ | Oct 1 |
|---|---|---|---|---|---|---|---|---|
| $C_{15}$ | $C_{14}$ | $C_{13}$ | $C_{12}$ | $C_{11}$ | $C_{10}$ | $C_9$ | $C_8$ | Oct 2 |
| $C_{23}$ | $C_{22}$ | $C_{21}$ | $C_{20}$ | $C_{19}$ | $C_{18}$ | $C_{17}$ | $C_{16}$ | Oct 3 |
| $C_{31}$ | $C_{30}$ | $C_{29}$ | $C_{28}$ | $C_{27}$ | $C_{26}$ | $C_{25}$ | $C_{24}$ | Oct 4 |
| NBI | RS OR RESOURCE $ID_1$ | | | NBI | RS OR RESOURCE $ID_0$ | | | Oct 5 |
| ... | ... | | | ... | ... | | | ⋮ |
| NBI | RS OR RESOURCE $ID_M$ | | | NBI | RS OR RESOURCE $ID_{M-1}$ | | | |

FIG. 7

| C7 | C6 | C5 | C4 | C3 | C2 | C1 | R OR $C_0$ | Oct 1 |
|---|---|---|---|---|---|---|---|---|
| ... | ... | ... | ... | ... | ... | ... | ... | ⋮ |
| $C_N$ | $C_{N-1}$ | $C_{N-2}$ | $C_{N-3}$ | $C_{N-4}$ | $C_{N-5}$ | $C_{N-6}$ | $C_{N-7}$ | Oct n |
| R | CI (or $CI_0$) | NBI (or $NBI_0$) | SSB INDEX 0 | | | | | Oct n+1 |
| CSI-RS RESOURCE $ID_0$ (OR NZP-CSI-RS RESOURCE $ID_0$) | | | | | | | | Oct n+2 |
| R | CI | NBI | SSB INDEX 1 | | | | | Oct n+3 |
| CSI-RS RESOURCE $ID_1$ | | | | | | | | Oct n+4 |
| ... | ... | ... | | | | | | Oct n+5 |
| R | CI | NBI | SSB INDEX M | | | | | Oct n+6 |
| CSI-RS RESOURCE $ID_M$ | | | | | | | | Oct n+7 |

FIG. 8

EP 4 017 080 A1

| | | | | | | | | |
|---|---|---|---|---|---|---|---|---|
| $C_7$ | $C_6$ | $C_5$ | $C_4$ | $C_3$ | $C_2$ | $C_1$ | R OR $C_0$ | Oct 1 |
| ... | ... | ... | ... | ... | ... | ... | ... | ⋮ |
| $C_N$ | $C_{N-1}$ | $C_{N-2}$ | $C_{N-3}$ | $C_{N-4}$ | $C_{N-5}$ | $C_{N-6}$ | $C_{N-7}$ | Oct n |
| R | R | R | R | R | R | RSI (or $RSI_0$) | NBI (or $NBI_0$) | Oct n+1 |
| RS OR RESOURCE $ID_0$ | | | | | | | | Oct n+2 |
| R | R | R | R | R | R | RSI | NBI | Oct n+3 |
| RS OR RESOURCE $ID_1$ | | | | | | | | Oct n+4 |
| ... | ... | ... | | | ... | | | Oct n+5 |
| R | R | R | R | R | R | RSI | NBI | Oct n+6 |
| RS OR RESOURCE $ID_M$ | | | | | | | | Oct n+7 |

FIG. 9

EP 4 017 080 A1

| | | | | |
|---|---|---|---|---|
| RSI (or $RSI_0$) | NBI (or $NBI_0$) | R | SERVING CELL $ID_0$ | Oct 1 |
| RS OR RESOURCE $ID_0$ | | | | Oct 2 |
| RSI | NBI | R | SERVING CELL $ID_1$ | Oct 3 |
| RS OR RESOURCE $ID_1$ | | | | Oct 4 |
| ... | | | | ⋮ |
| RSI | NBI | R | SERVING CELL $ID_M$ | |
| RS OR RESOURCE $ID_M$ | | | | |

FIG. 10

EP 4 017 080 A1

FIG. 11

FIG. 12

EP 4 017 080 A1

FIG. 13

10, 20

| | |
|---|---|
| **1001**<br><br>PROCESSOR | **1004**<br><br>COMMUNICATION APPARATUS |
| **1002**<br><br>MEMORY | **1005**<br><br>INPUT APPARATUS |
| **1003**<br><br>STORAGE | **1006**<br><br>OUTPUT APPARATUS |

1007

FIG. 14

## INTERNATIONAL SEARCH REPORT

| International application No. |
| --- |
| PCT/JP2019/032062 |

**A.  CLASSIFICATION OF SUBJECT MATTER**
Int.Cl. H04W24/10(2009.01)i, H04W16/28(2009.01)i, H04W28/06(2009.01)i

According to International Patent Classification (IPC) or to both national classification and IPC

**B.  FIELDS SEARCHED**

Minimum documentation searched (classification system followed by classification symbols)
Int.Cl. H04W4/00-99/00

| Documentation searched other than minimum documentation to the extent that such documents are included in the fields searched | |
| --- | --- |
| Published examined utility model applications of Japan | 1922-1996 |
| Published unexamined utility model applications of Japan | 1971-2019 |
| Registered utility model specifications of Japan | 1996-2019 |
| Published registered utility model applications of Japan | 1994-2019 |

Electronic data base consulted during the international search (name of data base and, where practicable, search terms used)

**C.  DOCUMENTS CONSIDERED TO BE RELEVANT**

| Category* | Citation of document, with indication, where appropriate, of the relevant passages | Relevant to claim No. |
| --- | --- | --- |
| Y | US 2019/0190582 A1 (SAMSUNG ELECTRONICS CO., LTD.) 20 June 2019, paragraphs [0130], [0396]-[0409], [0423], [0425], fig. 12A-12C & WO 2019/124983 A1 | 1-6 |

☒  Further documents are listed in the continuation of Box C.　　☐  See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 27 November 2019 (27.11.2019) | 10 December 2019 (10.12.2019) |

| Name and mailing address of the ISA/ Japan Patent Office 3-4-3, Kasumigaseki, Chiyoda-ku, Tokyo 100-8915, Japan | Authorized officer Telephone No. |
| --- | --- |

Form PCT/ISA/210 (second sheet) (January 2015)

**INTERNATIONAL SEARCH REPORT**

| International application No. |
| --- |
| PCT/JP2019/032062 |

C (Continuation).   DOCUMENTS CONSIDERED TO BE RELEVANT

| Category* | Citation of document, with indication, where appropriate, of the relevant passages | Relevant to claim No. |
| --- | --- | --- |
| Y | CONVIDA WIRELESS, "On Beam Failure Recovery for SCell", 3GPP TSG-RAN WG1 #97 R1-1907466 [online], [retrieved on 26 November 2019], Retrieved from the Internet: <URL:https://www.3gpp.org/ftp/TSG_RAN/WG1_RL1/TSGR1_97/Docs/R1-1907466.zip>, 04 May 2019, pp. 1-6, Proposal 6-8 | 1-6 |
| Y | LENOVO, MOTOROLA MOBILITY, "Discussion of multi-beam operation", 3GPP TSG RAN WG1 #96bis R1-19004573 [online], [retrieved on 26 November 2019], Retrieved from the Internet: <URL:https://www.3gpp.org/ftp/TSG_RAN/WG1_RL1/TSGR1_96b/Docs/R1-1904573.zip>, 29 March 2019, pp. 1-6, section 2.2 (R1-1904573) | 1-6 |
| Y | NOKIA, NOKIA SHANGHAI BELL, "Enhancements on Multi-beam Operation", 3GPP TSG RAN WG1 Meeting #95 R1-1813490 [online], [retrieved on 26 November 2019], Retrieved from the Internet: <URL:https://www.3gpp.org/ftp/TSG_RAN/WG1_RL1/TSGR1_95/Docs/R1-1813490.zip>, 02 November 2018, pp. 1-15, section 2.4.4 | 1-6 |
| A | INTERDIGITAL INC., "Corrections on BFR for SCell", 3GPP TSG-RAN WG2 Meeting #102 R2-1806822 [online], [retrieved on 26 November 2019], Retrieved from the Internet: <URL:https://www.3gpp.org/ftp/TSG_RAN/WG2_RL2/TSGR2_102/Docs/R2-1806822.zip>, 11 May 2018, pp. 1-3 | 1-6 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Evolved Universal Terrestrial Radio Access (E-UTRA) and Evolved Universal Terrestrial Radio Access Network (E-UTRAN); Overall description; Stage 2 (Release 8). *3GPP TS 36.300 V8.12.0,* April 2010